# EUROPEAN PATENT APPLICATION

(11) **EP 2 093 976 A1**
(43) Date of publication of application: **26.08.2009**
(21) Application number: 08300105.7
(22) Date of filing: 21.02.2008
(51) Int. Cl.: H04L 29/08

(54) **Method for providing profile adaptation in between a web service client and a web server and web service profile adapter**

(71) Applicant: Alcatel Lucent, 75008 Paris (FR)
(72) Inventor: Maas, Gerard, 2650 Edegem (BE); Van Vlerken, Bert, 2930 Brasschaat (BE)
(74) Representative: Schneider, Sandra

(57) **Abstract**

The present invention relates to a method for providing profile adaptation in between a web service client (12) and a web service server (22). The method comprises the step of receiving from the web service client (12) a request for the web service server (22) in SIP protocol format, said request comprising a description of the profile (13) of the web service client (12). The method creates an adaptation in between the profile (13) of the web service client and the profile (23) of the web service server (22) and provides an interface in between the web service server (22) and the web service client (12). The method performs the profile adaptation to said interface (35) for communication in between the web service client (12) and the web service server (25). The invention further relates to a web service profile adapter for performing said method.

## Description

### BACKGROUND OF THE INVENTION

The invention relates to a method for providing profile adaptation in between a web service client and a web service server. The invention further relates to a corresponding web service profile adapter for profile adaptation in between a web service client and a web service server.

A web service is an XML (Extensible markup language) based exposure of a function or capability. A web service uses open protocols such as HTTP (hypertext transmission protocol) and SOAP (simple object access protocol, also service oriented architecture protocol). Web services enable interoperability by defining an open and standardized language that can be interpreted on any running platform. To increase the abstraction level offered by a web service, the basic capability exposure of a web service can be enriched with additional functionality that offers certain guarantees or enables additional operations in addition to the offered web service functions. Examples of additional operations are security, reliable delivery, etc.

Due to the fast evolving nature of web services many different and some times conflicting standards rise and jeopardize the interoperability of web services. In a SOA (service oriented architecture) environment a particular architectural construction has been created to address the interope-robility issue of the web services. Interoperability of web services is also referred to as profile interoperability as web services define their capabilities in so-called profiles. The particular architectural construction that has been created to address the profile interoperability is the enterprise service bus (ESB).

There exist several different implementations of the enterprise service bus. A basic common foundation lies on the configuration of a web service end point that enables the translation of web service specific feafures into a common so-called bus language. The enterprise service bus thus allows interactions in between web services connected to the enterprise service bus.

The solution of the enterprise service bus offers static interoperability in between web services. In carder to be integrated in the enterprise service bus, newly offered web services have to be configured on the bus to be able to expose the capabilities to other services also connected to the enterprise service bus. New services have to be configured for the enterprise service bus. This increases the complexity for casual visiting web services, for example client web services. The process to attach the new web service to the enterprise service bus is an administrative one requiring human intervention.

In EP 1821496 A1 a system for invoking web services by means of SIP (session initiation protocol) signaling is described. The described system uses the SIP protocol to describe an interaction context in between a web service client and a web service server.

### OBJECT OF THE INVENTION

An object of the invention is to provide a method for providing profile adaptation in between a web service client and a web service server. Another object of the invention is to provide a web service profile adapter for profile adaptation in between a web service client and a web service server.

### SUMMARY OF THE INVENTION

These objects and other objects are solved by the features of the independent claims. Features of preferred embodiments of the invention can be found in the dependent claims.

The invention provides a method for profile adaptation in between a web service client and a web service server. The method comprises the steps of receiving from the web service client a request for the web service server in SIP protocol format. Said request comprises a description of the profile of the web service client. A profile of a web service gives the interaction context of the web service. It is a set of information needed to communicate with the service. It is a set of elements defining features for communicating the web service, such as, but not limited to, the protocol used to access the operation, the network connection, the service destination URL, service operation and message exchange pattern. In the next step the method creates an adaptation in between the profile of the web service client and the profile of the web service server. An adaptation is done by providing an interface in between the web service server to the web service client, the interface being in SIP protocol format. The interface in between the web service server and the web service client corresponds to a translation of the information given by the profile of the web service server to the information given by the profile of the web service client. In the next step, the profile adaptation through the interface is performed for communication in between the web service client and the web service server.

The inventive method provides an automatic adaptation of a web service client requiring services of a web service server. The web service client does not need to have the knowledge of the profile of the web service server. The adaptation of the profile is done automatically by the inventive method or the web service profile adapter performing the method.

In an advantageous embodiment of the invention the profile of the web service server is looked up in a registry. After receiving the request of the web service client for the web service server the inventive method looks up the profile of the web service server in the registry. In the next step it creates the adaptation of the profiles. A registry is a database where web services, especially web service servers can publish their capabilities. This can for example be done in form of a UDDI (universal description discovery and integration).

The web service profile adapter performing the inventive method looks up the profile of the web service server in the registry after having received the request from the web service client.

In a further preferred embodiment of the invention the interaction session created in between the web service client and the web service server is an interaction session based on the SIP protocol. The profile adaptation provided by the invention is then preferably maintained for the duration of the interaction session.

In a further preferred embodiment of the invention the inventive web service profile adapter is comprised in a SIP application server. The SIP application server then is adapted to perform the inventive method in a web service profile adapter comprised in the SIP application server.

In a further preferred embodiment of the invention the SIP application server is comprised in an enterprise service bus. The enterprise service bus then offers the possibility to easily and automatically integrate a visiting web service. This can for example be a web service client requesting services of one or more web service servers connected to the enterprise service bus.

The invention introduces a negotiation phase for web services communication where the end points of web services bearing different profiles create an interaction session using the session initiation protocol.

During the initialization phase of the session, e. g. by SIP invite, the end points of the web services exchange information about their profiles using a description of the profile they bear. A SIP network component handles the request coming from the web service and communicate the profile description to an adaptation component in the network, the adaptation component being the inventive web service profile adapter. The web service profile adaptor is able to create adaptation pipelines to accommodate the interfaces of the web services and therefore enables them to seamlessly communicate. The web service profile adapter creates a pipeline whose end points are provided to the web services as the party to contact. This process is totally transparent for the participating web services, effectively enabling seamless communication between them. The web services can communicate using this pipeline throughout the duration of the session until the session is ended by any of the participants.

In the case where both web services have the some profile the web service profile adapter can just provide the real address of the peer web service and stay out of the interaction part.

### BRIEF DESCRIPTION OF THE DRAWINGS

Other characteristics and advantages of the invention will become apparent in the following detailed description of preferred embodiments of the invention illustrated by the accompanying drawings given by way of non limiting illustrations. The same reference numerals may be used in different figures of the drawings to identify the same or similar elements.

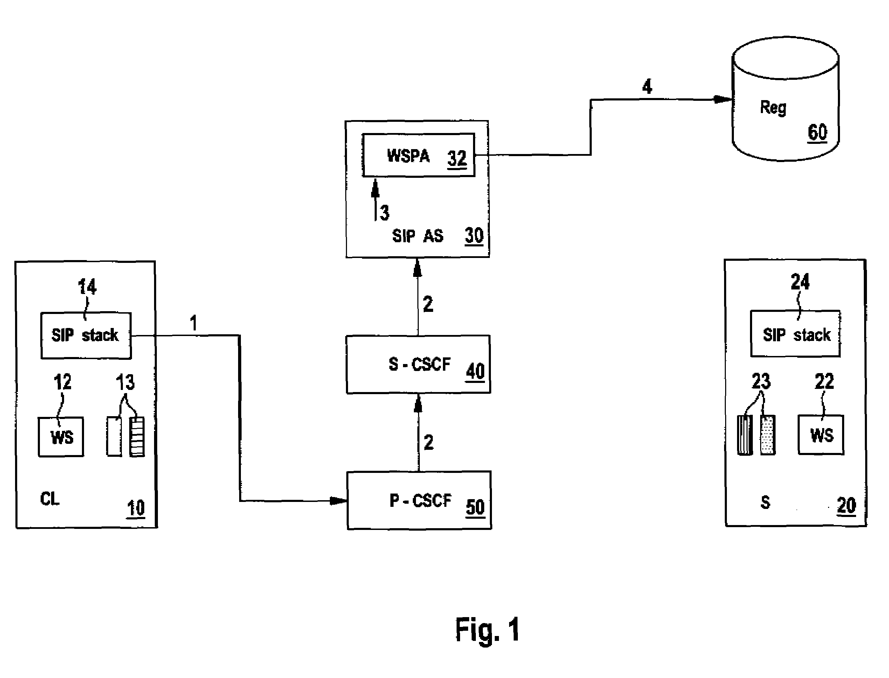

Figure 1, figure 2, and figure 3 show schematic overviews over web services communicating over SIP network components.

### DETAILED DESCRIPTION OF THE INVENTION

Shown in figure 1 is a web service client 12 and a web service client profile 13, contained in a client 10. The client 10 also contains a SIP stack 14. Also shown in figure 1 is a web service server 22 and a web service server profile 23 comprised in a server 20. Also contained in the server 20 is a SIP stack 24.

Also shown in figure 1 are SIP network components 50, 40, and 30.
Component 50 is a proxy call session control function (P-CSCF). A P-CSCF is a SIP proxy that is the first point of contact for a service. Component 40 is a serving call session control function (S-CSCF). A S-CSCF is a central node of the signaling plane. It is the SIP server and performs session control also. Component 30 is a SIP application server. A SIP application server hosts an execute services and interfaces with the S-CSCF using a SIP protocol.

As shown in figure 1 the SIP application server comprises the web service profile adapter 32.

Also shown in figure 1 is the registry 60 for web services. A registry 60 for web services is a data base, where capabilities in form of profiles of web services may be registered.

Figure 1 shows step 1, where the web service client 12 requests over the SIP stack 14 of the client 10 a web service server 22. Said request comprises the profile 13 of the web service client 12. The request passes through the SIP network components 40 and 50 and is passed on to the SIP application server 30 in step 2. In step 3 the request is passed on to the web service profile adapter 32 where the adaptation in between the profiles of the web service client and the profile of the web service server will be performed. To this end the web service profile adapter requests the profile of the web service server 22 from the registry 60 in step 4. When publishing its capabilities a web service server 22 publishes its profile 23 in a registry 60. In the registry 60 the capabilities of the web service server are then accessible to other web services.

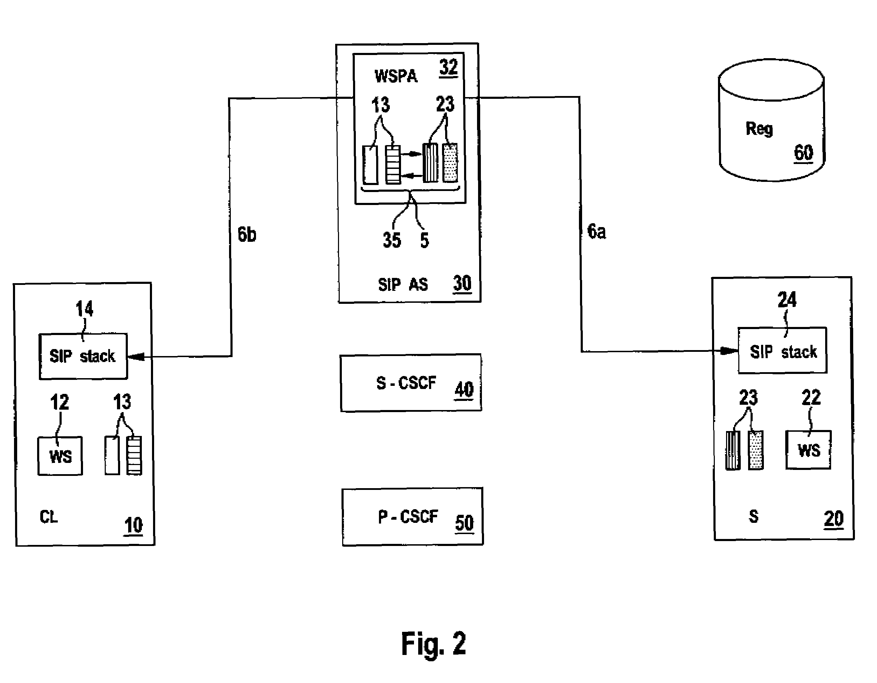

Shown in figure 2 is then step 5 where a profile adaptation in between the profile 13 of the web service client and the profile 23 of the web service server is performed. The result of the profile adaptation is an interface 35 in between the web service server 22 and the web service client 12. The interface 35 is in SIP protocol format. In steps 6a and 6b the interface, also called pipeline, is then communicated to the SIP stacks 14 and 21 of the respective client 10 and server 20.

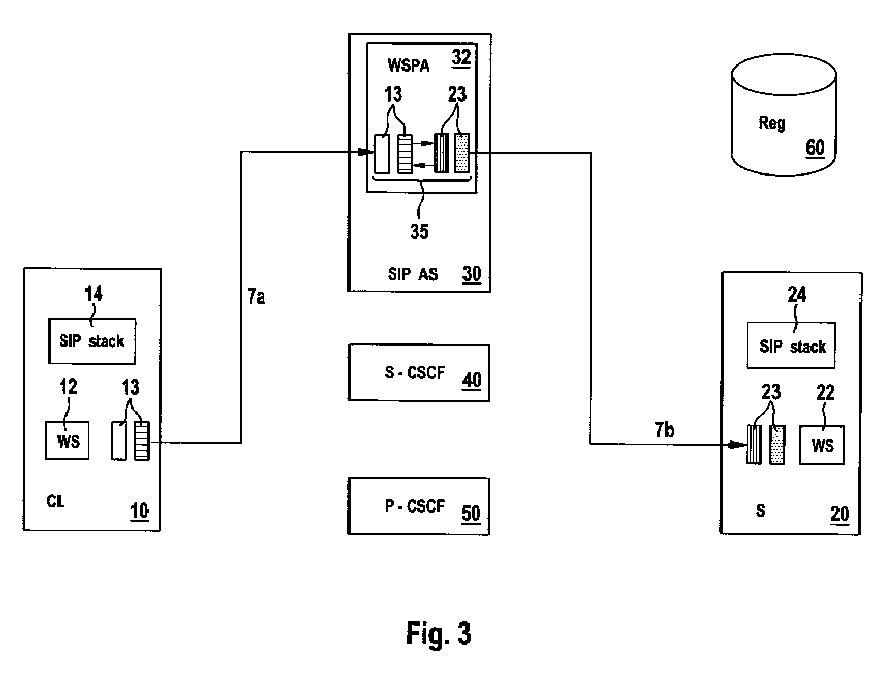

Shown in figure 3 is a communication in between the web service client 12 and the web service server 22 over said interface 35. The web services can communicate over step 7a and 7b seamlessly over the pipeline provided by the web service profile adapter 32. This communication is transparent to the web services 12 and 22.

## Claims

1. Method for providing profile adaptation in between a web service client (12) and a web service server (22), the method comprising the steps of receiving from the web service client (12) a request for the web service server (22) in SIP protocol format, said request comprising a description of the profile (13) of the web service client (12),
creating an adaptation in between the profile (13) of the web service client (12) and the profile (23) of the web service server (22), providing an interface (35) in between the web service server (22) and the web service client (12), the interface (35) being in SIP protocol format, and
performing profile adaptation through said interface (35) for communication in between the web service client (12) and the web service server (22).

2. Method for providing profile adaptation according to claim 1, further comprising the step of
looking up the profile (23) of the web service server (22) in a registry (60).

3. Method for providing profile adaptation according to claim 1, further comprising the step of
creating in between the web service server (22) and the web service client (12) an interaction session using the SIP protocol.

4. Method for providing profile adaptation according to claim 3,
**characterized in that**
said profile adaptation for communication in between the web service client (12) and the web service server (22) is performed for the duration of said interaction session.

5. Web service profile adaptor (32) for profile adaptation in between a web service client (12) and a web service server (22), the web service profile adaptor comprising
means adapted to receive from the web service client (12) a request for the web service server (22) in SIP protocol format, said request
comprising a description of the profile (13) of the web service client (12), means adapted to create an adaptation in between profile (13) of the web service client (12) and the profile (23) of the web service server (22), means adapted to provide an interface (35) in between the web service server (22) to the web service client (12), the interface (35) being in SIP protocol format, and
means adapted to perform said profile adaptation for communication in between the web service client (12) and the web service server (22) through said interface (35).

6. Web service profile adaptor (32) according to claim 5, further comprising
means adapted to create in between the web service server (22) and the web service client (12) on interaction session using the SIP protocol.

7. Web service profile adaptor (32) according to claim 6, **characterized in that**
said profile adaptation for communication in between the web service client (12) and the web service server (22) is performed for the duration of said interaction session.

8. Web service profile adaptor (32) according to claim 5, further comprising
means adapted to look up the profile (23) of the web service server (22) in a registry (60).

9. SIP application server (30), **characterized by** comprising a web service profile adaptor (32) according to claim 5.

10. Enterprise service bus, **characterized by** comprising a SIP application server (30) according to claim 9.
